# EUROPÄISCHE PATENTANMELDUNG

(11) **EP 4 212 356 A1**
(43) Veröffentlichungstag der Anmeldung: **19.07.2023**
(21) Anmeldenummer: 22213407.4
(22) Anmeldetag: 14.12.2022
(51) Int. Cl.: B60C 9/07, B60C 15/00, B60C 9/17

(54) **BELASTUNGSRESISTENTER FAHRZEUGLUFTREIFEN**

(30) Priorität: 14.01.2022 DE 102022200384
(71) Anmelder: Continental Reifen Deutschland GmbH, 30165 Hannover (DE)
(72) Erfinder: Ahmed, Owais, 30165 Hannover (DE); Berger, Christoph, 30165 Hannover (DE)
(74) Vertreter: Continental Corporation

(57) **Zusammenfassung**

Die Erfindung betrifft einen Fahrzeugluftreifen (10), umfassend: a) eine Reifenkarkasse (12) mit einem sich von einer ersten Reifenwulst (14) erstreckenden ersten Seitenbereich (16), einem sich von einer zweiten Reifenwulst (18) erstreckenden zweiten Seitenbereich (20) und einem dazwischen angeordneten Zentralbereich (22), umfassend eine erste Karkasslage (24) und eine zweite Karkasslage (26), die jeweils eine Vielzahl von gummierten Festigkeitsträgern (28a-d) umfassen, die sich jeweils durch den ersten Seitenbereich (16), den zweiten Seitenbereich (20) und den Zentralbereich (22) der Reifenkarkasse (12) erstrecken, und b) einen relativ zur Reifenkarkasse (12) radial außenliegenden Laufstreifen (30), wobei die erste Karkasslage (24) einen ersten Lagenumschlag (32) um ein erstes Wulstelement (38) und einen zweiten Lagenumschlag (34) um ein zweites Wulstelement (40) aufweist, wobei das Ende des ersten Lagenumschlags (32) und das Ende des zweiten Lagenumschlags (34) so angeordnet sind, dass sie in der orthogonal zur Umfangsrichtung stehenden Ebene von der Unterkante der jeweiligen Reifenwulst jeweils einen Abstand von mehr als 0,7*h aufweisen, wobei h die Höhe des Fahrzeugluftreifens (10) ist, gemessen von der Unterkante der jeweiligen Reifenwulst bis zur Oberseite des Laufstreifens (30), wobei zumindest ein Teil der gummierten Festigkeitsträger (28a-d) der ersten Karkasslage (24) und der zweiten Karkasslage (26) bezogen auf die Umfangsrichtung des Fahrzeugluftreifens (10) im ersten Seitenbereich (16) und im zweiten Seitenbereich (20) einen Kordwinkel im Bereich von 80° bis 90° und im Zentralbereich (22) einen Kordwinkel im Bereich von 5° bis 75° aufweist.

## Beschreibung

Die Erfindung betrifft einen Fahrzeugluftreifen, welcher bei einem vorteilhaft niedrigen Gewicht eine hohe Belastungsresistenz aufweist.

Klassische Fahrzeugluftreifen verfügen über eine Reifenkarkasse aus einer oder mehreren Karkasslagen, deren gummierte Festigkeitsträger sich zumeist von Reifenwulst zu Reifenwulst durch die Reifenkarkasse erstrecken und dabei im Wesentlichen mit der Umfangsrichtung einen Kordwinkel von 90° einschließen. Diese Fahrzeugluftreifen werden auch als Radialreifen bezeichnet. In radialer Richtung außen zu der Reifenkarkasse weisen entsprechende Radialreifen einen Laufstreifen auf, welcher für den späteren Kontakt mit der Fahrbahn vorgesehen ist. In vielen Fällen weisen Radialreifen zwischen dem Laufstreifen und der Reifenkarkasse eine oder mehrere Verstärkungslagen auf, beispielsweise Gürtellagen, welche wiederum gummierte Festigkeitsträger umfassen und dem Reifen unter anderem die notwendige Steifigkeit verleihen. Entsprechende zusätzliche Gürtellagen erhöhen jedoch das Gesamtgewicht des Fahrzeugluftreifens, was mit Blick auf die Fahreigenschaften, den Rollwiderstand und den Treibstoffverbrauch regelmäßig als nachteilig empfunden wird.

Ausgehend von den herkömmlichen Radialreifen wurde erkannt, dass die Steifigkeit sowie weitere relevante Reifeneigenschaften dadurch verbessert werden können, dass zumindest in einem unter dem Laufstreifen liegenden Zentralbereich der Reifenkarkasse von einer ideal radialen Anordnung abgewichen wird, sodass die gummierten Festigkeitsträger lediglich in den Seitenbereichen des Fahrzeugreifens einen radialen Verlauf aufweisen, im Zentralbereich der Reifenkarkasse jedoch einen Kordwinkel aufweisen, welcher sich deutlich von 90° unterscheidet. Hierdurch ist es vorteilhafterweise möglich, die Zahl der Verstärkungslagen, beispielsweise die Zahl der Gürtellagen, zwischen dem Laufstreifen und der Reifenkarkasse zu reduzieren, sodass leistungsfähige Fahrzeugluftreifen, welche im Bereich der Aufstandsfläche über die nötige Steifigkeit verfügen, auch bei Einsatz von lediglich einer Verstärkungslage bzw. in einigen Fällen auch gänzlich ohne Verstärkungslagen hergestellt werden können, was mit Blick auf die dadurch zu erreichende Gewichtsreduktion als besonders vorteilhaft empfunden wird.

Bei entsprechenden Fahrzeugluftreifen mit einer gewinkelten Reifenkarkasse, die über eine verringerte Zahl von Verstärkungslagen verfügen, wird jedoch die Haltbarkeit und die Belastungsresistenz häufig als unzureichend bewertet. Insbesondere weisen solche Fahrzeugluftreifen häufig einen unzureichenden Widerstand gegen eindringende Fremdpartikel auf.

Außerdem zeigt sich bei entsprechenden Fahrzeugluftreifen in der Praxis eine besonders ausgeprägte Anfälligkeit für Materialfehler im unteren Seitenwandbereich, insbesondere im Bereich der Reifenwülste, die sich insbesondere als Ablösungen und Aufspaltungen der verschiedenen Lagen, insbesondere der Karkasslagen, manifestieren. Diese Materialfehler gehen zumeist von den Endbereichen der eingesetzten Lagen aus und zeigen sich besonders ausgeprägt für Fahrzeugluftreifen, die eine niedrige "Aspekt Ratio", d.h. ein niedriges Verhältnis von Reifenhöhe zu Reifenbreite, aufweisen, insbesondere von 40 % oder weniger. Ohne an diese Theorie gebunden sein zu wollen, gehen die Erfinder davon aus, dass dies durch die verringerte Steifigkeit der Reifen im Bereich der Reifenaufstandsfläche bzw. des Laufstreifens und die vergleichsweise hohe Belastung der Reifenkarkasse bedingt ist, die diese im Einsatz unmittelbar erfährt.

Die primäre Aufgabe der vorliegenden Erfindung war es, die vorstehend beschriebenen Nachteile des Standes der Technik zu beheben oder zumindest zu vermindern.

Insoweit war es die Aufgabe der vorliegenden Erfindung, in Fahrzeugluftreifen mit einer teilweise gewinkelten Reifenkarkasse die Widerstandsfähigkeit gegen Belastungen, insbesondere gegen den Laufstreifen penetrierende Objekte zu erhöhen, sodass ein Fahrzeugluftreifen mit einer hohen Belastbarkeit auch dann erreicht werden kann, wenn lediglich eine oder gar keine Verstärkungslagen, wie beispielsweise Gürtellagen, eingesetzt werden.

Dabei war es eine Aufgabe der vorliegenden Erfindung, einen Fahrzeugluftreifen anzugeben, der im Bereich der Aufstandsfläche zumindest teilweise über eine erhöhte Steifigkeit verfügt, sodass der Verzicht auf zusätzliche Verstärkungslagen leichter möglich ist.

Es war ebenfalls eine Aufgabe der vorliegenden Erfindung, die insbesondere bei Fahrzeugluftreifen mit einer teilweise gewinkelten Reifenkarkasse beobachtete größere Anfälligkeit für Materialfehler im Seitenwand- und Wulstbereich zu reduzieren, insbesondere in Fahrzeugluftreifen mit einer niedrigen "Aspect Ratio" und/oder Fahrzeugluftreifen einer geringen Zahl von Verstärkungslagen.

Es war eine ergänzende Aufgabe der vorliegenden Erfindung, dass der anzugebende Fahrzeugluftreifen in einfacher Weise und unter Verwendung solcher Gerätschaften und Materialien herstellbar sein sollten, die in der Reifenindustrie bereits regelmäßig zum Einsatz kommen.

Es war eine ergänzende Aufgabe der vorliegenden Erfindung, dass die anzugebenden Fahrzeugluftreifen für eine breite Anzahl von Fahrzeugtypen geeignet sein sollten und hinsichtlich der eingesetzten Materialien eine hohe Flexibilität aufweisen sollen.

Die Erfinder haben nunmehr erkannt, dass sich die vorstehend beschriebenen Aufgaben überraschenderweise lösen lassen, wenn beim Einsatz einer Reifenkarkasse, welche über zumindest zwei Karkasslagen verfügt, deren Festigkeitsträger im Zentralbereich unterhalb des Laufstreifens jeweils einen von 90° abweichenden Kordwinkel aufweisen, besonders ausgeprägte Lagenumschläge einer Karkasslage vorgesehen werden, wie es in den Ansprüchen definiert ist.

Die vorstehend genannten Aufgaben werden entsprechend durch den Gegenstand der Erfindung gelöst, wie er in den Ansprüchen definiert ist. Bevorzugte erfindungsgemäße Ausgestaltungen ergeben sich aus den Unteransprüchen und den nachfolgenden Ausführungen.

Solche Ausführungsformen, die nachfolgend als bevorzugt bezeichnet sind, werden in besonders bevorzugten Ausführungsformen mit Merkmalen anderer als bevorzugt bezeichneter Ausführungsformen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal einer Ausführungsform mit einem oder mehreren weiteren Merkmalen anderer Ausführungsformen kombiniert wird, die in irgendeinem Ausmaß als bevorzugt bezeichnet werden.

Die Erfindung betrifft einen Fahrzeugluftreifen, umfassend:
a) eine Reifenkarkasse mit einem sich von einer ersten Reifenwulst erstreckenden ersten Seitenbereich, einem sich von einer zweiten Reifenwulst erstreckenden zweiten Seitenbereich und einem dazwischen angeordneten Zentralbereich, umfassend eine erste Karkasslage und eine zweite Karkasslage, die jeweils eine Vielzahl von gummierten Festigkeitsträgern umfassen, die sich jeweils durch den ersten Seitenbereich, den zweiten Seitenbereich und den Zentralbereich der Reifenkarkasse erstrecken, und
b) einen relativ zur Reifenkarkasse radial außenliegenden Laufstreifen,
   wobei die erste Karkasslage einen ersten Lagenumschlag um ein erstes Wulstelement und einen zweiten Lagenumschlag um ein zweites Wulstelement aufweist
   wobei das Ende des ersten Lagenumschlags und das Ende des zweiten Lagenumschlags so angeordnet sind, dass sie in der orthogonal zur Umfangsrichtung stehenden Ebene von der Unterkante der jeweiligen Reifenwulst jeweils einen Abstand von mehr als 0,7*h aufweisen, wobei h die Höhe des Fahrzeugluftreifens ist, gemessen von der Unterkante der jeweiligen Reifenwulst bis zur Oberseite des Laufstreifens,
   wobei zumindest ein Teil der gummierten Festigkeitsträger der ersten Karkasslage und der zweiten Karkasslage bezogen auf die Umfangsrichtung des Fahrzeugluftreifens im ersten Seitenbereich und im zweiten Seitenbereich einen Kordwinkel im Bereich von 80° bis 90° und im Zentralbereich einen Kordwinkel im Bereich von 5° bis 75° aufweist.

In Übereinstimmung mit dem fachmännischen Verständnis handelt es sich bei den regelmäßig rotationssymmetrischen Fahrzeugluftreifen um Produkte, deren Aufbau zweckmäßigerweise relativ zu der radialen Richtung beschrieben wird, d.h. der von der Mitte des Fahrzeugluftreifens radial nach außen weisenden Richtung, sodass die radiale Richtung senkrecht auf der Rotationsachse des Fahrzeugluftreifens steht.

Die Grundlage für den erfindungsgemäßen Fahrzeugluftreifen bilden die Reifenkarkasse und der Laufstreifen, welche zueinander in üblicher Weise angeordnet sind. Der Fahrzeugluftreifen weist als äußere Schicht, d.h. radial außen liegend, einen Laufstreifen auf, welcher gegebenenfalls mit einem Profil versehen werden kann, so dass ein erfindungsgemäßer Fahrzeugluftreifen bevorzugt ist, wobei der Laufstreifen auf der radial außenliegenden Oberfläche ein Profil aufweist. Der Fahrzeugluftreifen weist in Übereinstimmung mit dem üblichen Aufbau entsprechender Fahrzeugluftreifen auf beiden Seiten umlaufende Reifenwülste auf.

Unterhalb der Reifenkarkasse, d.h. radial innen liegend, kann der Fahrzeugluftreifen in vielen Fällen eine Reifeninnenschicht umfassen. Entsprechende Reifeninnenschichten sind dem Fachmann geläufig und dienen regelmäßig dazu, das Innere des Fahrzeugluftreifens luftdicht zu verschließen. Regelmäßig bevorzugt ist entsprechend ein erfindungsgemäßer Fahrzeugluftreifen, wobei die radial innenliegende Seite der Reifenkarkasse zumindest teilweise von der Reifeninnenschicht bedeckt ist.

Der Fachmann versteht, dass Fahrzeugluftreifen in der überwiegenden Zahl der Fälle zu einem großen Teil symmetrisch und dabei komplementäre Komponenten häufig aus ähnlichen Materialien aufgebaut sind. Entsprechend ist es im Rahmen der vorliegenden Erfindung bei sämtlichen Merkmalen, die für ein erstes und ein zweites Element offenbart werden, beispielsweise für den ersten Seitenbereich und den zweiten Seitenbereich, explizit bevorzugt, wenn das entsprechende Merkmal auf beide Seiten des Fahrzeugluftreifens, d.h. für das erste und das zweite Element, realisiert wird.

Eine weitere relevante Bezugsrichtung, mit der der Fachmann regelmäßig den Aufbau entsprechender Fahrzeugluftreifen beschreibt, ist die Umfangsrichtung des Fahrzeugluftreifens. In Übereinstimmung mit dem fachmännischen Verständnis handelt es sich hierbei an jedem Punkt des Kreisumfanges um die jeweilige Kreistangente, die mit der radialen Richtung, d.h. der Verbindung zwischen dem jeweiligen Punkt und dem Mittelpunkt des Reifens einen rechten Winkel einschließt.

In herkömmlichen Radialreifen verlaufen die gummierten Festigkeitsträger der Karkasslagen im Wesentlichen radial. Dies bedeutet, dass die gummierten Festigkeitsträger über die gesamte Breite der Reifenkarkasse quer zur Umfangsrichtung des Fahrzeugluftreifens mit der Umfangsrichtung einen Winkel von etwa 90° einschließen. Entsprechend liegt in einem herkömmlichen Radialreifen jeder gummierte Festigkeitsträger in der Draufsicht auf den Fahrzeugluftreifen über seine gesamte Länge im Wesentlichen im gleichen Kreisabschnitt. Die entsprechende Größe wird vom Fachmann auch als der sogenannte Kordwinkel der in der Karkasslage vorhandenen Festigkeitsträger bezeichnet. Auch wenn die Definition dieser Kordwinkel in Abhängigkeit von der Umfangsrichtung auf den ersten Blick umständlich erscheinen mag, ist es für den Fachmann in der Praxis zwanglos möglich, den Kordwinkel, d.h. den relativen Winkel des Festigkeitsträgers zur Umfangsrichtung, zu bestimmen.

In dem erfindungsgemäßen Fahrzeugluftreifen wird die Reifenkarkasse nunmehr in zumindest drei theoretische Bereiche unterteilt, nämlich den ersten Seitenbereich, welcher sich von der ersten Reifenwulst in Richtung der Reifenaufstandsfläche erstreckt, den Zentralbereich und den zweiten Seitenbereich, welcher sich von der zweiten Reifenwulst in Richtung der Reifenaufstandsfläche erstreckt. Hierbei kann der Zentralbereich zweckmäßigerweise der Bereich der Reifenkarkasse sein, der im Fahrzeugluftreifen unterhalb des Laufstreifens angeordnet ist, wohingegen der erste und zweite Seitenbereich beispielsweise die Reifenkarkasse im Bereich der Flanken des Fahrzeugluftreifens bilden.

Erfindungsgemäß wird im Fahrzeugluftreifen von der vollständig radialen Konstruktion abgewichen, indem nämlich lediglich in dem ersten und zweiten Seitenbereich eine weitgehend radiale Anordnung der Festigkeitsträger, d.h. mit einem Kordwinkel von 80° bis 90°, eingestellt wird. Innerhalb des Zentralbereichs der Reifenkarkasse wird hingegen ein Kordwinkel im Bereich von 5° bis 75° eingestellt, so dass eine Reifenkarkasse erhalten wird, die als teilweise gewinkelte Reifenkarkasse bezeichnet werden kann. In erfindungsgemäßen Fahrzeugluftreifen ist der Zentralbereich somit der Bereich zwischen den Seitenbereichen, in dem zumindest ein Teil der gummierten Festigkeitsträger beider Karkasslagen einen Kordwinkel im Bereich von 5° bis 75° aufweist.

Die erfindungsgemäßen Fahrzeugluftreifen umfassen zumindest zwei Karkasslagen in der Reifenkarkasse, die sich jeweils durch beide Seitenbereiche und den Zentralbereich, d. h. quer zur Umfangsrichtung durch die gesamte Reifenkarkasse, erstrecken. Der Einsatz von zumindest zwei Karkasslagen ist nach Erkenntnis der Erfinder dabei notwendig, um insbesondere in dem unterhalb des Laufstreifens angeordneten Zentralbereich für eine hinreichende Widerstandsfähigkeit gegen eindringende Objekte zu sorgen. Erfindungsgemäß weisen beide Karkasslagen im Zentralbereich einen spürbar von 90° abweichenden Kordwinkel auf, wodurch in erfindungsgemäßen Fahrzeugluftreifen im Zentralbereich eine vorteilhafte Steifigkeit erreicht wird, wodurch das Auftreten von belastungsbedingten Materialfehlern in den radial innenliegenden Teilen der Reifenkarkasse verringert werden kann.

Spezifisch für die erfindungsgemäßen Fahrzeugluftreifen ist nunmehr, dass bei Vorliegen von zwei Karkasslagen, die jeweils teilweise gewinkelt sind, für zumindest eine der Karkasslagen an beiden Seiten des Fahrzeugluftreifens Lagenumschläge vorgesehen werden, bei denen die Karkasslage jeweils im Bereich der Reifenwulst um ein Wulstelement herumgelegt und an dem jeweiligen Seitenbereich der Reifenkarkasse entlang in Richtung des Laufstreifens hochgefaltet wird. Entsprechende Lagenumschläge sind für radiale Karkasslagen aus dem Stand der Technik bekannt und erstrecken sich in den meisten Fällen nur soweit in Richtung des Laufstreifens, dass sie die in der Reifenwulst angeordneten Wulstelemente überdecken.

Die Erfinder haben nunmehr erkannt, dass zur Lösung der vorstehend beschriebenen Aufgaben bei Einsatz einer teilweise gewinkelten Reifenkarkasse mit zwei Karkasslagen von diesem üblichen Vorgehen abgewichen werden muss, sodass nämlich die Enden der Lagenumschläge deutlich weiter nach oben, d. h. in radiale Richtung nach außen gezogen werden müssen, sodass diese einen Abstand von der Unterkante der jeweiligen Reifenwulst aufweisen, der mehr als 70 % der Höhe des Fahrzeugluftreifens entspricht. Die Höhe ist in Übereinstimmung mit der branchenüblichen Nomenklatur dabei die Höhe von der Unterkante der jeweiligen Reifenwulst bis zur Oberseite des Laufstreifens, bzw. des höchsten Punkts des Laufstreifens. Der Fachmann im Bereich der Reifenfertigung ist es insoweit gewohnt, Relationen und Längenangaben in dem Querschnitt durch den Fahrzeugluftreifen anzugeben, dessen Ebene orthogonal zur Umfangsrichtung steht, sodass der Blick des Betrachters in Umfangsrichtung zeigt. Dies ist, bedingt durch den im Wesentlichen radial symmetrischen Aufbau von Fahrzeugluftreifen, eine besonders geeignete Darstellung, um die konstruktiven Details eines Fahrzeugluftreifens und relative Abstände zuverlässig zu beschreiben. Entsprechend wird vorliegend auch der Abstand der Enden der Lagenumschläge von der jeweiligen Reifenwulst in dieser Ebene definiert. Durch diese Anordnung des ungewöhnlich langen Lagenumschlags in Richtung der Aufstandsfläche des Fahrzeugluftreifens ist es in Kombination mit den zwei teilweise gewinkelten Karkasslagen überraschenderweise möglich, das Auftreten von Materialfehlern, insbesondere von Ablösungen und Aufspaltungen zwischen den verschiedenen Lagen, d. h. ein adhäsives Versagen zwischen den Schichten des Verbundes, effizient zu unterbinden, und das sogar bei Fahrzeugluftreifen mit einer niedrigen "aspect ratio" und das selbst beim völligen Verzicht auf Verstärkungslagen.

Ohne an diese Theorie gebunden sein zu wollen gehen die Erfinder davon aus, dass dies zumindest anteilig darauf zurückzuführen ist, dass das Ende des Lagenumschlags, welches bei mechanischer Belastung der Fahrzeugreifens einen Ausgangspunkt für unerwünschte Ablösungen darstellen kann, aus dem mechanisch besonders belasteten Wulstbereich in die Nähe des Zentralbereichs geführt wird, welcher bedingt durch die doppelt nicht-radiale Ausführung der Festigkeitsträger in den zwei Karkasslagen über eine vorteilhafte Steifigkeit verfügt.

In synergistischer Weise wird durch den weitreichenden Lagenumschlag und damit das zumindest das abschnittsweise Vorliegen von Seitenwandbereichen der Reifenkarkasse, in denen drei Schichten von Karkasslagen, d. h. die erste Karkasslage, die zweite Karkasslage und der Lagenumschlag der ersten Karkasslage, übereinander angeordnet sind, eine besonders belastungsresistente Seitenwand erhalten, die insbesondere gegen die Penetration durch Fremdobjekte besonders geschützt ist und auch Deformationen besser verträgt, die beispielsweise beim Überfahren von Hindernissen auftreten können.

Wie vorstehend erläutert, ist es mit erfindungsgemäßen Fahrzeugluftreifen vorteilhafterweise möglich, das Auftreten von Materialfehlern in der Reifenkarkasse stark zu reduzieren. Da sich diese Materialfehler bei aus dem Stand der Technik bekannten Fahrzeugluftreifen insbesondere bei niedrigen "aspect ratios" zeigen, ist es besonders vorteilhaft, eben solche Fahrzeugluftreifen erfindungsgemäß auszuführen. Bevorzugt ist entsprechend ein erfindungsgemäßer Fahrzeugluftreifen, wobei der Fahrzeugluftreifen einen Quotienten A = h/b von 0,4 oder weniger, bevorzugt 0,3 oder weniger, aufweist.

Nach Einschätzung der Erfinder zeigen sich die Vorteile der erfindungsgemäßen Fahrzeugluftreifen zuverlässig dann, wenn die Enden der Lagenumschläge auf mehr als 70 % der Reifenhöhe hochgezogen werden. Besonders vorteilhafte Ergebnisse werden jedoch erreicht, wenn die Enden noch weiter von der jeweiligen Reifenwulst weggeführt werden, da sie auf diese Weise umso näher an dem Zentralbereich mit dem gewinkelten Verlauf der Festigkeitsträger liegen, der in vorteilhafterweise eine Stabilisation der Enden ermöglicht. Bevorzugt ist folglich ein erfindungsgemäßer Fahrzeugluftreifen, wobei das Ende des ersten Lagenumschlags und das Ende des zweiten Lagenumschlags so angeordnet sind, dass sie in der orthogonal zur Umfangsrichtung stehenden Ebene von der Unterkante der jeweiligen Reifenwulst jeweils einen Abstand von mehr als 0,8*h, bevorzugt mehr als 0,9*h, besonders bevorzugt mehr als 1,0*h, aufweisen, wobei h die Höhe des Fahrzeugluftreifens ist, gemessen von der Unterkante der jeweiligen Reifenwulst bis zur Oberseite des Laufstreifens, und/oder wobei das Ende des ersten Lagenumschlags und das Ende des zweiten Lagenumschlags so angeordnet sind, dass sie in der orthogonal zur Umfangsrichtung stehenden Ebene von der Unterkante der jeweiligen Reifenwulst jeweils den gleichen Abstand aufweisen.

Eine der nach Einschätzung der Erfinder vorteilhaftesten Ausgestaltungen der erfindungsgemäßen Fahrzeugluftreifen wird dann erreicht, wenn die Enden der jeweiligen Lagenumschläge so weit von den Wulstbereichen weggeführt werden, dass diese selbst im Bereich des Zentralbereichs der Reifenkarkasse liegen, d.h. in dem Bereich, in dem die Festigkeitsträger der Karkasslagen einen niedrigeren Kordwinkel aufweisen. Dies bedeutet, dass die Enden der Lagenumschläge und damit zwangsläufig auch ein Teil des als Lagenumschlag umgeschlagenen Karkassmaterials der ersten Karkasslage, im Zentralbereich liegt, in welchem die Festigkeitsträger der Karkasslagen einen gewinkelten Verlauf aufweisen. Hierdurch liegen die Enden der Lagenumschläge nicht nur in einem durch die schrägen Kordwinkel ausgezeichnet stabilisierten Bereich, sondern ermöglichen unterhalb des Laufstreifens zumindest teilweise einen Aufbau, bei dem drei Lagen von Karkassmaterial übereinander angeordnet sind, wodurch eine besonders hohe Resistenz gegen Penetration durch Fremdobjekte erreicht wird. Ganz besonders vorteilhaft ist bei dieser Ausgestaltung jedoch, dass die Festigkeitsträger in den Lagenumschlägen der ersten Karkasslage, analog zu dem Verlauf in den Seitenbereichen, in der weit überwiegenden Zahl der Fälle relativ zur Umfangsrichtung einen radialen Verlauf aufweisen. Die bevorzugt radial verlaufenden Festigkeitsträger der Lagenumschläge bilden somit mit den unterliegenden gewinkelten Bereichen der ersten und zweiten Karkasslage in der Draufsicht eine Gitterstruktur der Festigkeitsträger. Diese Gitterstruktur der Festigkeitsträger ist in synergistischer Weise nicht nur besonders resistent gegen eine Penetration entlang der radialen Richtung, sondern sorgt auch für eine zusätzlich erhöhte Steifigkeit in den von den Lagenumschlägen bedeckten Teilen des Zentralbereichs. Bevorzugt ist demgemäß ein erfindungsgemäßer Fahrzeugluftreifen, wobei das Ende des ersten Lagenumschlags und das Ende des zweiten Lagenumschlags so angeordnet sind, dass sie auf Höhe des Zentralbereichs der Reifenkarkasse liegen.

Der Fachmann versteht, dass etwaige Teile der ersten Karkasslage, welche durch einen besonders weitreichend ausgestalteten Lagenumschlag auf Höhe des Zentralbereichs der Reifenkarkasse liegen, keinen gewinkelten Verlauf, d. h. keine von 90° abweichenden Kordwinkel, aufweisen müssen, da der Verlauf der Festigkeitsträger in den Lagenumschlägen nicht von der vorstehenden Einteilung in die Bereiche der Reifenkarkasse und den dafür vorgegebenen Kordwinkeln betroffen ist und diese frei bestimmt werden können. Besonders bevorzugt ist aus fertigungstechnischer Sicht jedoch ein erfindungsgemäßer Fahrzeugluftreifen, wobei zumindest ein Teil der gummierten Festigkeitsträger der ersten Karkasslage im ersten Lagenumschlag und im zweiten Lagenumschlag, bevorzugt in beiden Lagenumschlägen, bezogen auf die Umfangsrichtung des Fahrzeugluftreifens einen Kordwinkel im Bereich von 80° bis 90°, bevorzugt 85° bis 90°, besonders bevorzugt 88° bis 90°, aufweisen.

Die Erfinder konnten ausgehend von den vorteilhaften Eigenschaften erfindungsgemäßer Fahrzeugluftreifen ermitteln, wie weit die Enden der Lagenumschläge in den Zentralbereich hineingezogen werden können. Hierbei haben die Erfinder erkannt, dass ab einem gewissen Überlapp der Enden über den Zentralbereich nur noch vergleichsweise geringe Vorteile in der Haltbarkeit erzielt werden können, wenn die Ende der Lagenumschläge noch weiter in die Mitte des Zentralbereichs hineingezogen werden. Hingegen hat sich gezeigt, dass vorteilhafterweise ein Mindestabstand zwischen den Enden der Lagenumschläge vorgesehen werden sollte, sodass diese sich nicht berühren und/oder überlappen. Dadurch ergibt sich insbesondere unter dem Aspekt eines gewichtsoptimierten Aufbaus erfindungsgemäßer Fahrzeugluftreifen ein besonders günstiges Intervall des Abstands zwischen den Enden, welches zielführender Weise in Abhängigkeit der Breite des Laufstreifens bzw. des Zentralbereichs, d. h. genauer in Abhängigkeit von deren Ausdehnung quer zur Umfangsrichtung, angegeben werden kann. Bevorzugt ist insoweit ein erfindungsgemäßer Fahrzeugluftreifen, wobei das Ende des ersten Lagenumschlags und das Ende des zweiten Lagenumschlags so angeordnet sind, dass sie in der orthogonal zur Umfangsrichtung stehenden Ebene voneinander einen Abstand im Bereich von 0,2*b bis 1,0*b, bevorzugt im Bereich von 0,4*b bis 0,9*b, besonders bevorzugt im Bereich von 0,6*b bis 0,8*b, aufweisen, wobei b die Breite des Laufstreifens und/oder des Zentralbereichs, bevorzugt des Zentralbereichs, ist.

Die erfindungsgemäßen Fahrzeugluftreifen sind hinsichtlich der Ausgestaltung der zweiten Karkasslage prinzipiell frei, so dass prinzipiell auch die zweite Karkasslage Lagenumschläge umfassen kann, die dann bevorzugt wie die Lagenumschläge der ersten Karkasslage ausgebildet werden sollten. Für bestimmte Anwendungen bevorzugt ist ein erfindungsgemäßer Fahrzeugluftreifen, wobei die zweite Karkasslage einen dritten Lagenumschlag um das erste Wulstelement und einen vierten Lagenumschlag um das zweite Wulstelement aufweist, wobei das Ende des dritten Lagenumschlags und das Ende des vierten Lagenumschlags so angeordnet sind, dass sie in der orthogonal zur Umfangsrichtung stehenden Ebene von der Unterkante der jeweiligen Reifenwulst jeweils einen Abstand von weniger als 0,9*h, bevorzugt weniger als 0,8*h, besonders bevorzugt weniger als 0,7*h, ganz besonders bevorzugt weniger als 0,6*h, aufweisen, wobei h die Höhe des Fahrzeugluftreifens ist, gemessen von der Unterkante der jeweiligen Reifenwulst bis zur Oberseite des Laufstreifens, oder dass sie in der orthogonal zur Umfangsrichtung stehenden Ebene von der Unterkante der jeweiligen Reifenwulst jeweils einen Abstand von mehr als 0,6*h, bevorzugt mehr als 0,7*h, besonders bevorzugt mehr als 0,8*h, ganz besonders bevorzugt mehr als 0,9*h, aufweisen, wobei h die Höhe des Fahrzeugluftreifens ist, gemessen von der Unterkante der jeweiligen Reifenwulst bis zur Oberseite des Laufstreifens.

Nach Einschätzung der Erfinder ist es für die meisten Anwendungen, insbesondere mit Blick auf das Gesamtgewicht des Fahrzeugluftreifens, jedoch besonders vorteilhaft, wenn die zweite Karkasslage keine Lagenumschläge umfasst und entsprechend nur zwischen den beiden Reifenwülsten verläuft, wobei die Erfinder es als besonders vorteilhaft für die Gesamthaltbarkeit des erfindungsgemäßen Fahrzeugluftreifen identifiziert haben, wenn die zweite Karkasslage jedenfalls nur bis zur Höhe der beiden Wulstelemente, bzw. den darin angeordneten Wulstkerne gezogen wird. Bevorzugt ist somit ein erfindungsgemäßer Fahrzeugluftreifen, wobei die zweite Karkasslage zwischen der ersten Reifenwulst und der zweiten Reifenwulst verläuft, und/oder wobei die zweite Karkasslage auf beiden Seiten des Fahrzeugluftreifens auf Höhe von in den Reifenwülsten angeordneten Wulstelementen, insbesondere Wulstkernen, endet.

Den Erfindern ist es gelungen, hinsichtlich der relativen Anordnung der zwei Karkasslagen zueinander besonders vorteilhafte Ausgestaltungen zu identifizieren, wobei in beiden Ausgestaltungen die zweite Karkasslage in der Querschnittsansicht zumindest abschnittweise über der ersten Karkasslage angeordnet ist, d. h. in radialer Richtung außerhalb.

Hierbei gibt es vor allem zwei günstige Ausgestaltungen, welche mit Blick auf die Haltbarkeit der Reifenkarkasse als besonders günstig angesehen werden. Besonders belastungsresistente Fahrzeugluftreifen werden nämlich erhalten, wenn die zweite Karkasslage über der ersten Karkasslage und auch über den jeweiligen Lagenumschlägen der ersten Karkasslage platziert wird, sodass die Lagenumschläge durch die zweite Karkasslage zusätzlich fixiert werden und das Ende der Lagenumschläge zwischen den zwei Karkasslagen angeordnet und entsprechend besonders zuverlässig stabilisiert werden kann. Als Alternative hierzu schlagen die Erfinder vor, die Lagenumschläge der ersten Karkasslage um die zweite Karkasslage herumzuschlagen, sodass diese durch die erste Karkasslage quasi eingefasst wird. Hierdurch wird das untere Ende der zweiten Karkasslage, welches in die Wulstbereiche hineinragt, besonders gut stabilisiert, wodurch ungewollte Auslösungen des Verbunds, welche anderenfalls vom unteren Ende der zweiten Karkasslage ausgehen könnten, effizient unterbunden werden. Bevorzugt ist ein erfindungsgemäßer Fahrzeugluftreifen, wobei die zweite Karkasslage relativ zur ersten Karkasslage in radialer Richtung zumindest abschnittweise, bevorzugt vollständig, außen liegt, wobei das Ende des ersten Lagenumschlags und das Ende des zweiten Lagenumschlags bevorzugt zwischen der ersten Karkasslage und der zweiten Karkasslage angeordnet sind, und/oder wobei die zweite Karkasslage abschnittsweise zwischen der ersten Karkasslage und dem ersten und/oder zweiten Lagenumschlag der ersten Karkasslage angeordnet ist.

Auch wenn es theoretisch denkbar ist, dass nur ein Teil der Festigkeitsträger in den beiden Karkasslagen die vorstehend definierten Kordwinkel aufweist, ist es für den Fachmann selbstverständlich, dass es bevorzugt ist, wenn sämtliche Festigkeitsträger die entsprechenden Kordwinkel aufweisen. Dies gilt insbesondere, weil die Festigkeitsträger in typischen Verbundmaterialien, welche für die Fertigung von Karkasslagen eingesetzt werden, ohnehin zumeist im Wesentlichen parallel verlaufen, sodass entsprechende Ausführungsformen besonders leicht und in effizienter Weise durch die Verwendung von in der Reifenfertigung üblichen Materialien hergestellt werden können. Bevorzugt ist somit ein erfindungsgemäßer Fahrzeugluftreifen, wobei sämtliche der gummierten Festigkeitsträger der ersten Karkasslage und der zweiten Karkasslage bezogen auf die Umfangsrichtung des Fahrzeugluftreifens im ersten Seitenbereich und im zweiten Seitenbereich einen Kordwinkel im Bereich von 80° bis 90° und im Zentralbereich einen Kordwinkel im Bereich von 5° bis 75° aufweist. Bevorzugt ist entsprechend auch ein erfindungsgemäßer Fahrzeugluftreifen, wobei mehr als 90 %, bevorzugt mehr als 95 %, besonders bevorzugt mehr als 98 %, ganz besonders bevorzugt sämtliche, der Festigkeitsträger der ersten Karkasslage, im Zentralbereich einen Kordwinkel aufweisen, der sich um weniger als 10°, bevorzugt um weniger als 5°, besonders bevorzugt weniger als 2°, ganz besonders bevorzugt weniger als 1°, vom mittleren Kordwinkel der Festigkeitsträger der ersten Karkasslage im Zentralbereich unterscheidet, und/oder wobei mehr als 90 %, bevorzugt mehr als 95 %, besonders bevorzugt mehr als 98 %, ganz besonders bevorzugt sämtliche, der Festigkeitsträger der zweiten Karkasslage, im Zentralbereich einen Kordwinkel aufweisen, der sich um weniger als 10°, bevorzugt um weniger als 5°, besonders bevorzugt weniger als 2°, ganz besonders bevorzugt weniger als 1 °, vom mittleren Kordwinkel der Festigkeitsträger der zweiten Karkasslage im Zentralbereich unterscheidet. Bevorzugt ist insoweit ebenfalls ein erfindungsgemäßer Fahrzeugluftreifen, wobei die erste Karkasslage und/oder die zweite Karkasslage jeweils genau eine Lage an Festigkeitsträgern umfasst, wobei die Festigkeitsträger in jeder Karkasslage bevorzugt im Wesentlichen parallel zueinander angeordnet sind.

Den Erfindern ist es gelungen, für den Verlauf der Festigkeitsträger der beiden Karkasslagen sowohl in den Seitenbereichen als auch im Zentralbereich geeignete Kordwinkel zu identifizieren, mit denen besonders leistungsstarke Fahrzeugluftreifen erhalten werden können. Bevorzugt ist nämlich ein erfindungsgemäßer Fahrzeugluftreifen, wobei zumindest ein Teil, bevorzugt sämtliche, der gummierten Festigkeitsträger der ersten Karkasslage und der zweiten Karkasslage bezogen auf die Umfangsrichtung des Fahrzeugluftreifens im ersten Seitenbereich und im zweiten Seitenbereich einen Kordwinkel im Bereich von 85° bis 90°, besonders bevorzugt im Bereich von 88° bis 90°, aufweist, und/oder wobei zumindest ein Teil, bevorzugt sämtliche, der gummierten Festigkeitsträger der ersten Karkasslage und der zweiten Karkasslage bezogen auf die Umfangsrichtung des Fahrzeugluftreifens im Zentralbereich einen Kordwinkel im Bereich von 15° bis 55°, besonders bevorzugt im Bereich von 20° bis 35°, aufweist.

Die Erfinder haben erkannt, dass es der erfindungsgemäße Einsatz von zumindest zwei Karkasslagen es in vorteilhafter Weise ermöglicht, den Kordwinkel der Festigkeitsträger im Zentralbereich zwischen den Karkasslagen zu invertieren, d. h. die Festigkeitsträger der zwei Karkasslagen so anzuordnen, dass diese im Zentralbereich eine unterschiedliche Steigung aufweisen, die sich im Vorzeichen unterscheidet. Dies resultiert darin, dass die Festigkeitsträger zwischen den beiden Karkasslagen in der Draufsicht einen Winkel einschließen, der in Umfangsrichtung zeigt und dem Summenwinkel der beiden Kordwinkel entspricht. Hierdurch wird in vorteilhafterweise in der Draufsicht auf die Karkasslagen eine gitterförmige Überlagerung der Festigkeitsträger erreicht, welche einen besonders effizienten Schutz gegen die ungewollte Penetration der Karkasslage durch Fremdobjekte liefert und zudem eine besonders hohe Steifigkeit bedingt. Bevorzugt ist entsprechend ein erfindungsgemäßer Fahrzeugluftreifen, wobei die Festigkeitsträger der ersten Karkasslage im Zentralbereich mit den Festigkeitsträgern der zweiten Karkasslage einen in Umfangsrichtung weisenden Winkel einschließen, der die Summe der jeweiligen Kordwinkel ist, und/oder wobei die Festigkeitsträger der ersten Karkasslage im Zentralbereich relativ zu den Festigkeitsträgern der zweiten Karkasslage ein anderes Vorzeichen der Steigung aufweisen.

Ausgehend von der vorstehenden beschriebenen Ausführungsform ist es besonders vorteilhaft, wenn die Kordwinkel der Festigkeitsträger abgesehen vom Vorzeichen möglichst gleichartig ausgeführt werden. Hierbei ist insbesondere der Einsatz von identischen Kordwinkeln bevorzugt. Dies ermöglicht es nämlich in vorteilhafter Weise, zur Herstellung der Reifenkarkasse die gleichen Verbundmaterialien zu verwenden, wobei die zweite Karkasslage lediglich umgekehrt aufgelegt werden muss. Hierdurch weisen die Festigkeitsträger in den beiden Karkasslagen die gleichen Kordwinkel auf, wobei der Kordwinkel der einen Festigkeitsträger links und der andere rechts von der Umfangsrichtung liegt, so dass sich ein in Richtung der Umfangsrichtung weisender Winkel ergibt, der dem doppelten Kordwinkel der Festigkeitsträger in der ersten bzw. der zweiten Karkasslage entspricht. Bevorzugt ist ein erfindungsgemäßer Fahrzeugluftreifen, wobei sich der mittlere Kordwinkel der Festigkeitsträger der ersten Karkasslage im Zentralbereich um weniger als 15°, bevorzugt weniger als 10°, besonders bevorzugt weniger als 5°, ganz besonders bevorzugt weniger als 2°, vom mittleren Kordwinkel der Festigkeitsträger der zweiten Karkasslage unterscheidet, wobei die mittleren Kordwinkel im Zentralbereich insbesondere bevorzugt identisch sind.

Da ein Großteil der notwendigen Steifigkeit in erfindungsgemäßen Fahrzeugluftreifen durch den nicht linearen Verlauf der Festigkeitsträger im Zentralbereich erreicht wird, ist es für die weit überwiegende Zahl der Fälle zweckmäßig, dass der Zentralbereich, der Bereich der gewinkelt verlaufenden Festigkeitsträger, im Bereich des Laufstreifens bzw. der Aufstandsfläche platziert wird und in seinen Dimensionen möglichst weitgehend an die Abmessung des Laufstreifens angepasst wird. Bevorzugt ist entsprechend ein erfindungsgemäßer Fahrzeugluftreifen, wobei der Laufstreifen in radial nach außen weisender Richtung zumindest teilweise, bevorzugt vollständig, oberhalb des Zentralbereichs angeordnet ist. Bevorzugt ist zusätzlich oder alternativ ein erfindungsgemäßer Fahrzeugluftreifen, wobei der Quotient aus der Breite des Laufstreifens geteilt durch die Breite des Zentralbereichs, jeweils quer zur Umfangsrichtung des Fahrzeugluftreifens, im Bereich von 0,7 bis 2, bevorzugt im Bereich von 0,8 bis 1,6, besonders bevorzugt im Bereich von 0,9 bis 1,2, ganz besonders bevorzugt im Bereich von 0,95 bis 1,05, liegt, und/oder wobei der Quotient aus der Breite der Aufstandsfläche geteilt durch die Breite des Zentralbereichs, jeweils quer zur Umfangsrichtung des Fahrzeugluftreifens, im Bereich von 0,7 bis 2, bevorzugt im Bereich von 0,8 bis 1,6, besonders bevorzugt im Bereich von 0,9 bis 1,2, ganz besonders bevorzugt im Bereich von 0,95 bis 1,05, liegt.

Es kann als großer Vorteil der erfindungsgemäßen Fahrzeugluftreifen gesehen werden, dass diese die vorteilhaften Eigenschaften auch dann aufweisen, wenn zwischen dem Laufstreifen und der Reifenkarkasse keine weiteren Lagen, insbesondere keine Verstärkungslagen, beispielsweise Gürtellagen, vorgesehen sind. Selbst in diesen Fahrzeugluftreifen, die anderenfalls für die unerwünschte Penetration durch Fremdobjekte sowie nachteilige Materialfehler im Wulstbereich besonders anfällig sind, werden mit erfindungsgemäßen Fahrzeugluftreifen ausgezeichnete Eigenschaften erzielt. Besonders bevorzugt ist ein erfindungsgemäßer Fahrzeugluftreifen, wobei der Laufstreifen unmittelbar auf der radial außenliegenden Seite der Reifenkarkasse angeordnet ist, und/oder wobei im Fahrzeugluftreifen zwischen dem Laufstreifen und der Reifenkarkasse keine weiteren Lagen, insbesondere keine Verstärkungslagen, die eine Vielzahl von gummierten Verstärkungs-Festigkeitsträgern umfassen, angeordnet sind.

Um die Einsparpotentiale an Gewicht, die mit erfindungsgemäßen Fahrzeugluftreifen durch den verringerten Bedarf an Verstärkungslagen erzielbar sind, bestmöglich zu realisieren, ist es besonders bevorzugt, die Zahl der Verstärkungslagen möglichst gering zu halten, sofern solche überhaupt vorgesehen werden sollen. Als leistungsfähige Verstärkungslagen kommen in diesen Fällen vor allem Gürtellagen und Bandagen in Betracht, mit denen sich die Fahreigenschaften erfindungsgemäßer Fahrzeugluftreifen zielgenau abstimmen und/oder optimieren lassen. Bevorzugt ist ein erfindungsgemäßer Fahrzeugluftreifen, wobei zwischen der Reifenkarkasse und dem Laufstreifen höchstens eine weitere Lage, insbesondere höchstens eine Verstärkungslage, die eine Vielzahl von gummierten Verstärkungs-Festigkeitsträgern, umfasst, angeordnet ist. Bevorzugt ist in anderen Worten ein erfindungsgemäßer Fahrzeugluftreifen, wobei im Fahrzeugluftreifen zwischen dem Laufstreifen und der Reifenkarkasse zumindest eine weitere Lage, bevorzugt genau eine weitere Lage, angeordnet ist, wobei die weitere Lage besonders bevorzugt ausgewählt ist aus der Gruppe bestehend aus Verstärkungslagen, die eine Vielzahl von gummierten Verstärkungs-Festigkeitsträgern umfassen, insbesondere Gürtellagen und Bandagen. Bevorzugt ist insbesondere ein erfindungsgemäßer Fahrzeugluftreifen, wobei die weitere Lage eine Gürtellage ist, wobei die weitere Lage bevorzugt gummierte Festigkeitsträger umfasst, die besonders bevorzugt bezogen auf die Umfangsrichtung des Fahrzeugluftreifens einen Kordwinkel im Bereich von 10° bis 70°, weiter bevorzugt im Bereich von 15° bis 55°, noch weiter bevorzugt im Bereich von 20° bis 35°, aufweisen.

Bevorzugt ist ebenfalls ein erfindungsgemäßer Fahrzeugluftreifen, wobei die weitere Lage eine Cap-Ply Lage ist, wobei die weitere Lage bevorzugt gummierte Festigkeitsträger umfasst, die besonders bevorzugt bezogen auf die Umfangsrichtung des Fahrzeugluftreifens einen Kordwinkel im Bereich von 0° bis 5° aufweisen.

Sofern Verstärkungslagen vorgesehen werden, ist es explizit bevorzugt, dass die Enden der Lagenumschläge in der Draufsicht auf den Laufstreifen des Fahrzeugreifens über den Rand dieser Verstärkungslagen hinausragen und damit vorteilhafterweise in dem Bereich des Fahrzeugluftreifens liegen, der durch die Verstärkungslagen eine besondere Stabilisierung erfährt, da hierdurch die Haltbarkeit und Belastungsfähigkeit erfindungsgemäßer Fahrzeugluftreifen zusätzlich erhöht werden kann. Bevorzugt ist deshalb ein erfindungsgemäßer Fahrzeugluftreifen, wobei das Ende des ersten Lagenumschlags und das Ende des zweiten Lagenumschlags so angeordnet sind, dass sie in radialer Richtung relativ zu der oder den weiteren Lagen weiter außen liegen und mit diesen fluchten.

Es kann als großer Vorteil der erfindungsgemäßen Fahrzeugluftreifen gesehen werden, dass diese allein durch spezifische konstruktive Maßnahmen unter Verwendung von solchen Materialien hergestellt werden können, die in der Reifenindustrie regelmäßig zum Einsatz kommen. Insoweit konnten die Erfinder jedoch spezifische Materialien identifizieren, die sich ganz besonders für die Herstellung von leistungsfähigen Fahrzeugluftreifen eignen. Bevorzugt ist nämlich ein erfindungsgemäßer Fahrzeugluftreifen, wobei die Festigkeitsträger der ersten Karkasslage und/oder der zweiten Karkasslage textile Festigkeitsträger oder metallische Festigkeitsträger, insbesondere stählerne Festigkeitsträger, bevorzugt textile Festigkeitsträger mit zumindest einem Garn sind, wobei das Garn bevorzugt aus einem Material besteht, welches ausgewählt ist aus der Gruppe bestehend aus Aramid, Polyethylenterephthalat, Polyetherketon, Polyketon, Polyethylennaphtalat, Rayon, Viskose, Kohlefasern, Naturfasern, Glasfasern und PBO (Poly(p-phenylen-2,6-benzobisoxazol)), bevorzugt ausgewählt ist aus der Gruppe bestehend aus Aramid, Polyethylenterephthalat und Rayon.

Bevorzugt ist auch ein erfindungsgemäßer Fahrzeugluftreifen, wobei die Festigkeitsträger der ersten Karkasslage und/oder der zweiten Karkasslage einen mittleren Durchmesser im Bereich von 0,1 bis 2,0 mm, bevorzugt im Bereich von 0,2 bis 1,6 mm, aufweisen.

Bevorzugt ist entsprechend auch ein erfindungsgemäßer Fahrzeugluftreifen, wobei, wobei die gummierten Festigkeitsträger in der ersten Karkasslage und/oder zweiten Karkasslage von einem Gummierungswerkstoff umgeben sind, wobei der Gummierungswerkstoff bevorzugt herstellbar ist durch Vulkanisation einer vulkanisierbaren Kautschukmischung, wobei die vulkanisierbare Kautschukmischung besonders bevorzugt zumindest einen Dienkautschuk und zumindest einen Füllstoff umfasst.

Grundsätzlich bevorzugt ist ein erfindungsgemäßer Fahrzeugluftreifen, wobei der Fahrzeugluftreifen ein PKW-Reifen ist. Prinzipiell bevorzugt ist auch ein erfindungsgemäßer Fahrzeugluftreifen, wobei das erste Wulstelement und/oder das zweite Wulstelement einen Wulstkern, bevorzugt einen Wulstkern mit einer daran angeordneten Kernfahne, umfassen oder daraus bestehen. Bevorzugt ist ein erfindungsgemäßer Fahrzeugluftreifen, wobei außen auf dem ersten Seitenbereich und/oder auf dem zweiten Seitenbereich der Reifenkarkasse Seitenwände aus einem Gummiwerkstoff angeordnet sind. Für die überwiegende Zahl der Fälle bevorzugt ist auch ein erfindungsgemäßer Fahrzeugluftreifen, wobei der Laufstreifen auf der radial außenliegenden Oberfläche ein Profil aufweist.

Nachfolgend werden bevorzugte Ausführungsformen der Erfindung unter Bezugnahme auf die beiliegenden Figuren näher erläutert und beschrieben. Dabei zeigen:
- Fig. 1: eine schematische Querschnittsdarstellung eines nicht erfindungsgemäßen Fahrzeugluftreifens in einer erster Ausführungsform;
- Fig. 2: eine schematische Querschnittsdarstellung eines nicht erfindungsgemäßen Fahrzeugluftreifens in einer zweiten Ausführungsform;
- Fig. 3: eine schematische Querschnittsdarstellung eines erfindungsgemäßen Fahrzeugluftreifens in einer ersten Ausführungsform;
- Fig. 4: eine schematische Querschnittsdarstellung eines erfindungsgemäßen Fahrzeugluftreifens in einer zweiten Ausführungsform; und
- Fig. 5: eine schematische Erläuterung des Verlaufs der gummierten Festigkeitsträger in den verschiedenen Bereichen der Reifenkarkasse.

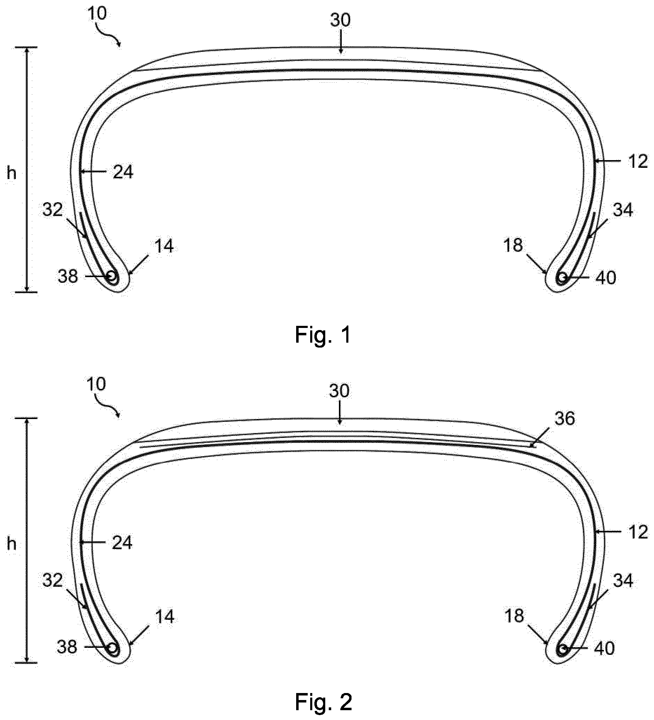

Die Fig. 1 und 2 zeigen zunächst jeweils schematische Querschnittdarstellungen von Fahrzeugluftreifen 10, welche vollständig radiale Reifenkarkassen 12 einsetzen und auch bedingt durch die zu kurzen Lagenumschläge nicht erfindungsgemäß sind.

Die Fig. 1 und 2 zeigen den Querschnitt in der orthogonal zur Umfangsrichtung stehenden Ebene durch den Fahrzeugluftreifen 10. Zu erkennen ist dabei eine Reifenkarkasse 12, welche lediglich aus einer ersten Karkasslage 24 besteht. Radial außen zur Reifenkarkasse 12 ist ein Laufstreifen 30 angeordnet.

Die erste Karkasslage 24 weist einen ersten Lagenumschlag 32 und einen zweiten Lagenumschlag 34 auf, die um ein erstes Wulstelement 38 bzw. ein zweites Wulstelement 40 herumgeschlagen sind, deren Enden in radialer Richtung jedoch lediglich bei etwa 30 % der Höhe des Fahrzeugreifens 10 in den Reifenflanken enden. Diese Höhe des Fahrzeugreifens 10 ist die Höhe von der Unterseite der jeweiligen Reifenwulst bis zur Oberseite des Laufstreifens 30 und wird in den Fig. 1 und 2 durch die eingetragenen Doppelpfeile kenntlich gemacht.

In den gezeigten Beispielen der Fig. 1 und 2 weisen die gummierten Festigkeitsträger 28a, 28b, 28c, 28d in der ersten Karkasslage 24 über die gesamte Breite der Reifenkarkasse 12 quer zur Umfangsrichtung bezogen auf die Umfangsrichtung des Fahrzeugluftreifens 10 jeweils einen Winkel von im Wesentlichen 90° auf. Im Gegensatz zu der Fig. 1 umfasst der Fahrzeugluftreifen 10 der Fig. 2 eine weitere Lage 36, bei es sich um eine Gürtellage handelt.

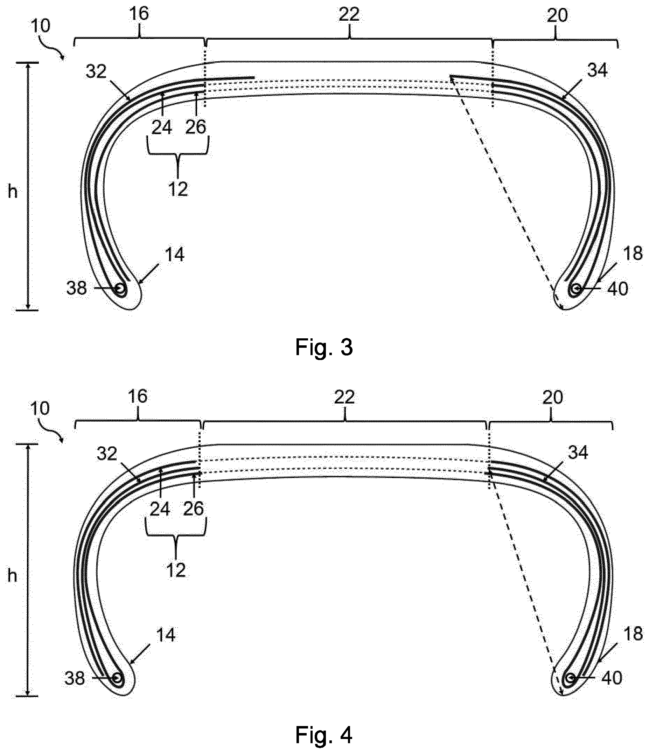

Fig. 3 zeigt eine schematische Querschnittsdarstellung eines erfindungsgemäßen Fahrzeugluftreifens 10 in einer ersten Ausführungsform, wobei aus Gründen der Übersichtlichkeit der Laufstreifen 30 nicht separat gezeigt wird. Zu erkennen ist eine Reifenkarkasse 12, welche aus einer ersten Karkasslage 24 und einer zweiten Karkasslage 26 besteht. Die Reifenkarkasse 12 ist in drei virtuelle Bereiche unterteilt, nämlich den ersten Seitenbereich 16, der sich von der ersten Reifenwulst 14 erstreckt und in den Zentralbereich 22 übergeht, sowie den vom Zentralbereich 22 bis zur zweiten Reifenwulst 18 reichenden zweiten Seitenbereich 20. In dem gezeigten Fahrzeugluftreifen 10 weisen die Festigkeitsträger 28a - 28d der ersten Karkasslage 24 und der zweiten Karkasslage 26 lediglich im ersten Seitenbereich 16 und im zweiten Seitenbereich 20 einen Kordwinkel von etwa 90° auf. Im Zentralbereich 22 der Reifenkarkasse 12 weisen die gummierten Festigkeitsträger 28a - 28d beider Karkasslagen bezogen auf die Umfangsrichtung des Fahrzeugluftreifens 10 hingegen einen Kordwinkel von etwa 33° auf, was durch eine gestrichelte Linie angedeutet wird.

Der jeweilige Kordwinkel der Festigkeitsträger 28a - 28d liegt in den verschiedenen Karkasslagen dabei zum einen links und zum anderen rechts der Umfangsrichtung, da in Überstimmung mit dem fachmännischen Verständnis als Kordwinkel immer der kleinere Winkel angegeben wird. Dies bedeutet, dass bei einem an sich identischen Kordwinkel der Festigkeitsträger 28a - 28d in der ersten Karkasslage 24 und der zweiten Karkasslage 26, diese entlang der Umfangsrichtung (aber auch quer zur Umfangsrichtung) eine Steigung mit umgekehrtem Vorzeichen aufweisen und entsprechend einen in Umfangsrichtung weisenden Winkel einschließen, welcher etwa 66° entspricht.

Im gezeigten Beispiel der Fig. 3 entspricht die Breite des Zentralbereichs 22 in etwa der Breite des Laufstreifens 30 bzw. der Aufstandsfläche.

Der in Fig. 3 gezeigte Fahrzeugluftreifen 10 hat eine "aspect ratio" von weniger als 40 %, was in Fig. 3 durch die lediglich schematische Darstellung nicht maßstabsgetreu wiedergegeben wird. Der Abstand der Enden der Lagenumschläge von den Unterkanten der jeweiligen Reifenwülste, welcher in Fig. 3 durch einen gestrichelten Doppelpfeil angedeutet ist, entspricht etwa 100 % der Höhe des Fahrzeugluftreifens 10. Es ist deutlich zu erkennen, dass das Ende des ersten Lagenumschlags 32 und das Ende des zweiten Lagenumschlags 34 jeweils so angeordnet sind, dass diese auf Höhe des Zentralbereichs 22 der Reifenkarkasse 12 liegen, d. h. in diesem Fall in radialer Richtung außen zu dem gewinkelten Teil der ersten Karkasslage 24 und der zweiten Karkasslage 26. In dem gezeigten Fahrzeugluftreifen 10 liegt der Laufstreifen 30 unmittelbar auf der radial außenliegenden Seite der Reifenkarkasse 12, sodass keine weiteren Lagen 36 insbesondere keine Verstärkungslagen, d. h. solche weiteren Lagen 36, die eine Vielzahl von gummierten Verstärkungs-Festigkeitsträgern umfassen, vorgesehen sind, was mit Blick auf das Gewicht des Fahrzeugluftreifens 10 besonders bevorzugt ist.

In dem gezeigten Beispiel der Fig. 3 sind die Festigkeitsträger 28a - 28d der beiden Karkasslagen jeweils von einem Gummierungswerkstoff umgeben, welcher durch Vulkanisation einer vulkanisierbaren Kautschukmischung erhalten wurde, welche unter anderem einen typischen Dienkautschuk, beispielsweise Styrol-Butadien-Kautschuk und einen Füllstoff, beispielsweise Ruß, umfasst. Die in den Gummierungswerkstoffen eingebetteten Festigkeitsträger 28a - 28d der ersten Karkasslage 24 und der zweiten Karkasslage 26 sind im gezeigten Beispiel sämtliche als textile Festigkeitsträger mit Garnen aus Polyethylenterephthalat ausgebildet und weisen einen Durchmesser von etwa 1,2 mm auf. Die Festigkeitsträger 28a - 28d sind dabei in den Karkasslagen jeweils im Wesentlichen parallel zueinander angeordnet. Entsprechend weisen die Festigkeitsträger 28a - 28d der beiden Karkasslagen im Zentralbereich jeweils im Wesentlichen keine Abweichungen von dem mittleren Kordwinkel der Festigkeitsträger 28a - 28d der jeweiligen Lage auf.

In der Fig. 3 ist die erste Karkasslage 24 oberhalb, d. h. in radialer Richtung außen, zur zweiten Karkasslage 26 angeordnet. Fig. 4 zeigt nunmehr eine bevorzugte Weiterbildung der Erfindung, bei der die zweiten Karkasslage 26 oberhalb, d. h. in radialer Richtung außen, zur ersten Karkasslage 24 angeordnet ist, so dass die Enden der Lagenumschläge zwischen den Karkasslagen besonders effizient stabilisiert werden können.

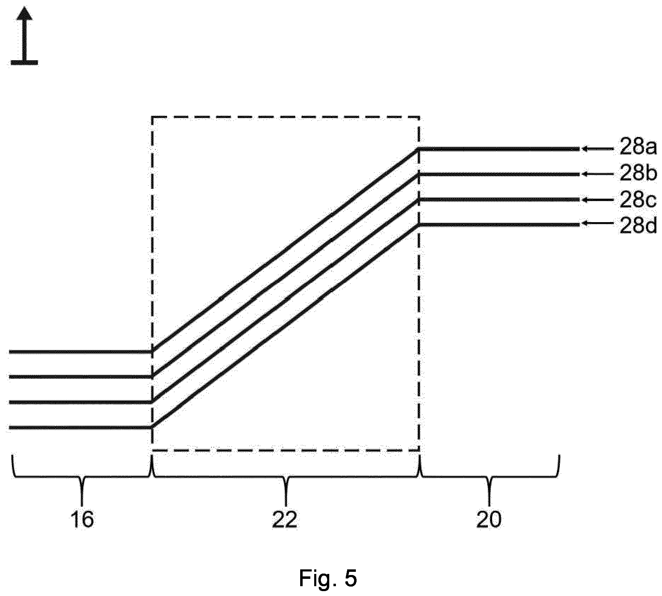

Fig. 5 zeigt abschließend eine schematische Erläuterung des Verlaufs der gummierten Festigkeitsträger 28a - 28d in einer Reifenkarkasse 12 für eine beispielhafte Karkasslage, wie sie bei der Fertigung von Fahrzeugluftreifen 10 beispielsweise vor dem Bombieren der Reifenkarkasse 12 und der Applikation des Laufstreifens 30 auf der Reifenaufbautrommel vorliegen kann. Die Lage des Zentralbereichs 22 ist durch die gestichelten Hilfslinien angedeutet. Die Umfangsrichtung des späteren Fahrzeugluftreifens 10 wird durch den Richtungspfeil angedeutet. Es ist klar zu erkennen, dass die Festigkeitsträger 28a - 28d im ersten Seitenbereich 16 und im zweiten Seitenbereich 20 mit der Umfangsrichtung einen Winkel von 90° einschließen, d.h. orthogonal zu dieser verlaufen. Im Gegensatz hierzu verlaufen die Festigkeitsträger 28a - 28d im Zentralbereich 22 zwar weiterhin parallel zueinander, jedoch relativ zur Umfangsrichtung mit einem kleineren Winkel von etwa 52°, der in Übereinstimmung mit dem fachmännischen Verständnis als der kleinere der zwei Schnittwinkle mit der Umfangrichtung bestimmt wird.

### Bezugszeichenliste

- 10: Fahrzeugluftreifen
- 12: Reifenkarkasse
- 14: Erster Reifenwulst
- 16: Erster Seitenbereich
- 18: Zweiter Reifenwulst
- 20: Zweiter Seitenbereich
- 22: Zentralbereich
- 24: Erste Karkasslage
- 26: Zweite Karkasslage
- 28a-d: Festigkeitsträger
- 30: Laufstreifen
- 32: Erster Lagenumschlag
- 34: Zweiter Lagenumschlag
- 36: Weitere Lage
- 38: Erstes Wulstelement
- 40: Zweites Wulstelement

## Patentansprüche

1. Fahrzeugluftreifen (10), umfassend:
a) eine Reifenkarkasse (12) mit einem sich von einer ersten Reifenwulst (14) erstreckenden ersten Seitenbereich (16), einem sich von einer zweiten Reifenwulst (18) erstreckenden zweiten Seitenbereich (20) und einem dazwischen angeordneten Zentralbereich (22), umfassend eine erste Karkasslage (24) und eine zweite Karkasslage (26), die jeweils eine Vielzahl von gummierten Festigkeitsträgern (28a-d) umfassen, die sich jeweils durch den ersten Seitenbereich (16), den zweiten Seitenbereich (20) und den Zentralbereich (22) der Reifenkarkasse (12) erstrecken, und
b) einen relativ zur Reifenkarkasse (12) radial außenliegenden Laufstreifen (30),
wobei die erste Karkasslage (24) einen ersten Lagenumschlag (32) um ein erstes Wulstelement (38) und einen zweiten Lagenumschlag (34) um ein zweites Wulstelement (40) aufweist,
wobei das Ende des ersten Lagenumschlags (32) und das Ende des zweiten Lagenumschlags (34) so angeordnet sind, dass sie in der orthogonal zur Umfangsrichtung stehenden Ebene von der Unterkante der jeweiligen Reifenwulst jeweils einen Abstand von mehr als 0,7*h aufweisen, wobei h die Höhe des Fahrzeugluftreifens (10) ist, gemessen von der Unterkante der jeweiligen Reifenwulst bis zur Oberseite des Laufstreifens (30),
wobei zumindest ein Teil der gummierten Festigkeitsträger (28a-d) der ersten Karkasslage (24) und der zweiten Karkasslage (26) bezogen auf die Umfangsrichtung des Fahrzeugluftreifens (10) im ersten Seitenbereich (16) und im zweiten Seitenbereich (20) einen Kordwinkel im Bereich von 80° bis 90° und im Zentralbereich (22) einen Kordwinkel im Bereich von 5° bis 75° aufweist.

2. Fahrzeugluftreifen (10) nach Anspruch 1, wobei das Ende des ersten Lagenumschlags (32) und das Ende des zweiten Lagenumschlags (34) so angeordnet sind, dass sie in der orthogonal zur Umfangsrichtung stehenden Ebene von der Unterkante der jeweiligen Reifenwulst jeweils einen Abstand von mehr als 0,8*h, bevorzugt mehr als 0,9*h, besonders bevorzugt mehr als 1,0*h, aufweisen, wobei h die Höhe des Fahrzeugluftreifens (10) ist, gemessen von der Unterkante der jeweiligen Reifenwulst bis zur Oberseite des Laufstreifens (30).

3. Fahrzeugluftreifen (10) nach einem der Ansprüche 1 oder 2, wobei das Ende des ersten Lagenumschlags (32) und das Ende des zweiten Lagenumschlags (34) so angeordnet sind, dass sie auf Höhe des Zentralbereichs (22) der Reifenkarkasse (12) liegen.

4. Fahrzeugluftreifen (10) nach einem der Ansprüche 1 bis 3, wobei das Ende des ersten Lagenumschlags (32) und das Ende des zweiten Lagenumschlags (34) so angeordnet sind, dass sie in der orthogonal zur Umfangsrichtung stehenden Ebene voneinander einen Abstand im Bereich von 0,2*b bis 1,0*b, bevorzugt im Bereich von 0,4*b bis 0,9*b, besonders bevorzugt im Bereich von 0,6*b bis 0,8*b, aufweisen, wobei b die Breite des Zentralbereichs (22) ist.

5. Fahrzeugluftreifen (10) nach einem der Ansprüche 1 bis 4, wobei die zweite Karkasslage (26) auf beiden Seiten des Fahrzeugluftreifens (10) auf Höhe von in den Reifenwülsten angeordneten Wulstkernen endet.

6. Fahrzeugluftreifen (10) nach einem der Ansprüche 1 bis 5, wobei die zweite Karkasslage (26) relativ zur ersten Karkasslage (24) in radialer Richtung zumindest abschnittweise, bevorzugt vollständig, außen liegt.

7. Fahrzeugluftreifen (10) nach einem der Ansprüche 1 bis 6, wobei zumindest ein Teil, bevorzugt sämtliche, der gummierten Festigkeitsträger (28a-d) der ersten Karkasslage (24) und der zweiten Karkasslage (26) bezogen auf die Umfangsrichtung des Fahrzeugluftreifens (10) im ersten Seitenbereich (16) und im zweiten Seitenbereich (20) einen Kordwinkel im Bereich von 85° bis 90°, besonders bevorzugt im Bereich von 88° bis 90°, aufweist, und/oder wobei zumindest ein Teil, bevorzugt sämtliche, der gummierten Festigkeitsträger (28a-d) der ersten Karkasslage (24) und der zweiten Karkasslage (26) bezogen auf die Umfangsrichtung des Fahrzeugluftreifens (10) im Zentralbereich (22) einen Kordwinkel im Bereich von 15° bis 55°, besonders bevorzugt im Bereich von 20° bis 35°, aufweist.

8. Fahrzeugluftreifen (10) nach einem der Ansprüche 1 bis 7, wobei die Festigkeitsträger (28a-d) der ersten Karkasslage (26) im Zentralbereich (22) mit den Festigkeitsträgern (28a-d) der zweiten Karkasslage (26) einen in Umfangsrichtung weisenden Winkel einschließen, der die Summe der jeweiligen Kordwinkel ist.

9. Fahrzeugluftreifen (10) nach einem der Ansprüche 1 bis 8 wobei im Fahrzeugluftreifen (10) zwischen dem Laufstreifen (30) und der Reifenkarkasse (12) zumindest eine weitere Lage (36), bevorzugt genau eine weitere Lage (36), angeordnet ist, wobei die weitere Lage (36) besonders bevorzugt ausgewählt ist aus der Gruppe bestehend aus Verstärkungslagen, die eine Vielzahl von gummierten Verstärkungs-Festigkeitsträgern umfassen, insbesondere Gürtellagen und Bandagen.

10. Fahrzeugluftreifen (10) nach einem der Ansprüche 1 bis 8, wobei im Fahrzeugluftreifen (10) zwischen dem Laufstreifen (30) und der Reifenkarkasse (12) keine weiteren Lagen (36) angeordnet sind.
